# EUROPÄISCHE PATENTSCHRIFT

(11) **EP 1 394 433 B1**
(45) Veröffentlichungstag und Bekanntmachung des Hinweises auf die Patenterteilung: **21.04.2010**
(21) Anmeldenummer: 02019061.7
(22) Anmeldetag: 28.08.2002
(51) Int. Cl.: F16D 13/71

(54) **Anpressplatte für eine Reibungskupplung**
Pressure plate for a friction clutch
Plateau de pression pour un embrayage à friction

(43) Veröffentlichungstag der Anmeldung: 03.03.2004
(73) Patentinhaber: ZF Sachs AG, 97424 Schweinfurt (DE)
(72) Erfinder: Schierling, Bernhard, Dipl.-Ing. (FH), 97273 Kürnbach (DE); Appel, Paul, 97500 Ebelsbach (DE); Berck, Rüdiger, Dipl.-Ing. (FH), 97464 Niederwerrn (DE)

(56) Entgegenhaltungen:
- FR-A- 2 707 714
- US-A- 1 700 932
- US-A- 4 020 937
- US-A1- 2002 014 387

## Beschreibung

Die vorliegende Erfindung betrifft eine Anpressplatte für eine Druckplattenbaugruppe einer Kraftfahrzeugreibungskupplung, welche einen aus Blechwerkstoff gebildeten und eine Reibfläche aufweisenden Anpressplattenkörper umfasst. Der Anpressplattenkörper einer solchen Anpressplatte umfasst weiterhin eine Formation zur Beaufschlagung, beispielsweise durch einen Kraftspeicher.

Anpressplatten für Kraftfahrzeugkupplungen werden nach heutigem Stand der Technik meistens durch Urformen hergestellt, beispielsweise als Gussteil. Wegen der beim Guss unvermeidlich großen Herstellungstoleranzen müssen diese Anpressplatten anschließend spanend weiterbearbeitet werden, um die geforderten Funktionsmaße einhalten zu können.

Es wurden auch Verfahren vorgeschlagen, Anpressplatten aus Blechrohlingen in einem Umformverfahren zu fertigen. So beschreibt etwa die US 4 020 937 eine derartige Anpressplatte, bei der zwei ringförmig verlaufende Bleche mit jeweils ungefähr U-förmigem Querschnitt ineinander gesetzt werden, so dass die Anpressplatte einen ringförmig verlaufenden Hohlraum einschließt. Das in axialer Richtung auf der Motorseite angeordnete Blech hat dabei die Funktion der Reibfläche und besitzt Nocken zur Befestigung von Blattfedern, mit denen die Anpressplatte mit dem Kupplungsgehäuse verbunden ist. Das auf der Getriebeseite angeordnete Blech weist eine ringförmig verlaufende, in axialer Richtung zum Kupplungsgehäuse hin vorstehende Auswölbung auf, die einen Angelpunkt zur Anlage einer Membranfeder bildet. Die beiden näherungsweise U-förmigen Bleche werden entweder zusammengeschweißt oder auf mechanische Weise, etwa durch Niete, aneinander befestigt. Eine Weiterbildung dieser Anpressplatte ist in der US 4 114 741 gezeigt. Bei der dort zu erkennenden Kraftfahrzeugreibungskupplung umfasst die Anpressplatte einen ringförmigen Hauptkörper mit U-förmigem Querschnitt, der eine Reibungsfläche bereitstellt. Zur Bereitstellung einer Hebelkante für eine Membranfeder dienen eines oder mehrere diagonal oder radial orientierte Versteifungselemente, die auf der der Reibflächenseite gegenüber liegenden Seite in dem U-förmigen Bereich aufgenommen und mit dem U-förmigen Blech verlötet oder verschweißt sind.

Auch aus der US 6 065 578 sowie der JP 7293582 sind Anpressplatten für Kraftfahrzeugreibungskupplungen bekannt, die durch Umformen aus Blechrohlingen hergestellt sind. Sie umfassen jeweils eine ringförmige, plane Grundplatte, die eine Reibfläche bereitstellt und Nocken zur Blattfederbefestigung besitzt. Auf die Grundplatte werden von der Getriebeseite her ein oder mehrere weitere Bleche aufgesetzt, an deren Außendurchmesser in axialer Richtung zum Kupplungsgehäuse hin vorstehende Lappen angeformt sind, die zur Versteifung und auch als Anlagepunkt für die Membranfeder dienen. Diese Bleche können entweder aus einem Blechring oder auch aus mehreren einzelnen Segmenten eines Blechrings bestehen.

Aus der US-A-2002/0014387 geht einer gattungsgemäßen Anpressplatte hervor.

Bei den genannten nach einem umformtechnischen Herstellungsverfahren produzierten Anpressplatten wird zwar im Prinzip ein spanabhebender Prozess vermieden, wie er bei der der standardmäßigen Herstellung einer solchen Anpressplatte im Gussverfahren unbedingt erforderlich ist. Die bisher bekannten umformtechnischen Herstellungsverfahren für Anpressplatten besitzen aber eine Reihe von Unzulänglichkeiten, so dass urformtechnische Herstellungsverfahren für Anpressplatten in der Regel trotzdem bevorzugt werden. Gründe hierfür sind beispielsweise darin zu suchen, dass durch die zum Zusammenbau der Anpressplatte erforderlichen Fügeprozesse, z.B. das Schweißen oder Nieten, relativ grobe Fertigungstoleranzen für die Anpressplatte auftreten. Aus diesem Grunde können auch bei dieser Herstellungsweise zusätzliche spanabhebende Umformschritte erforderlich sein, so dass der zum Erreichen einer bestimmten Qualität beim umformtechnischen Herstellungsverfahren nötige Aufwand gegenüber dem beim urformtechnischen Herstellungsverfahren nötigen Aufwand sogar noch größer sein kann.

Aufgabe der vorliegenden Erfindung ist es, eine Anpressplatte für eine Druckplattenbaugruppe einer Kraftfahrzeugreibungskupplung bereitzustellen, welche eine höhere Fertigungsgenauigkeit aufweist, ohne dass der zur Herstellung der Anpressplatte nötige Fertigungsaufwand gegenüber bekannten Herstellungsverfahren ansteigt.

Zur Lösung der genannten Aufgabe sieht die vorliegende Erfindung eine eingangs genannte Anpressplatte für eine Druckplattenbaugruppe einer Kraftfahrzeugreibungskupplung vor, bei der die Formation an dem Anpressplattenkörper angeformt ist.

Zur Herstellung einer derartigen Anpressplatte sind keinerlei Fügeprozesse erforderlich. Deswegen kann die durch bekannte Umformverfahren, beispielsweise durch Tiefziehen eines Blechrohlings, erzielbare vergleichsweise hohe Genauigkeit voll ausgenutzt werden. Es werden insbesondere keine spanabhebenden Fertigungsschritte mehr erfordert, so dass eine erfindungsgemäße Anpressplatte in relativ kurzer Zeit und mit geringem Fertigungsaufwand herstellbar ist.

Auf den ersten Blick scheint der Verzicht auf das Anbringen von Versteifungselementen an dem Blechrohling eine verringerte Steifigkeit der Anpressplatte zur Folge zu haben und somit zu Qualitätseinbußen zu führen, dies umso mehr als die Dicke der auf diese Weise bearbeitbaren Blechrohlinge begrenzt ist. Tatsächlich zeigt sich jedoch, dass durch Wahl von geeigneten Umformverfahren solche Nachteile weitgehend vermieden werden können. So eignen sich beispielsweise zur Herstellung einer erfindungsgemäßen Anpressplatte Kaltumformverfahren, bei denen der bearbeitete Blechrohling kaltverfestigt wird, wie es z.B. beim Tiefziehen der Fall ist. Bei diesen Verfahren ergibt sich nämlich bei metallischen Werkstoffen durch das Entstehen von Versetzungen innerhalb der Gitterstruktur des Metalls in den umgeformten Bereichen mit zunehmender Formänderung des Blechrohlings ein Anstieg der Zugfestigkeit, was zu einer höheren Steifigkeit führt. Wegen der höheren Steifigkeit kann nicht zuletzt das Gewicht einer erfindungsgemäßen Anpressplatte erheblich geringer sein als bei herkömmlichen Anpressplatten.

Eine solche erfindungsgemäße Anpressplatte kann sowohl für im Normalzustand geschlossene Kupplungen als auch für im Normalzustand geöffnete Kupplungen eingesetzt werden. Bei ersteren wird in der Regel über einen Kraftspeicher dauerhaft eine in Schließrichtung wirkende Beaufschlagungskraft auf die an der Anpressplatte erfindungsgemäß angeformte Formation ausgeübt. Zum Ausrücken der Kupplung muss eine entgegengesetzt wirkende Ausrückkraft aufgebracht werden. Für im Normalzustand geöffnete Kupplungen, die nur dann eingerückt sein sollen, wenn, sie über eine entsprechende Einrückkraft beaufschlagt werden, wird es häufig zweckmäßiger sein, die Formation statt über einen Kraftspeicher über einen anderen Kraftübertragungsmechanismus, etwa eine Hebelanordnung, zu beaufschlagen, was bei einer erfindungsgemäßen Anpressplatte ohne weiteres möglich ist. Wenn im Folgenden auf die Beaufschlagung durch einen Kraftspeicher Bezug genommen wird, so ist dies im Sinne eines der Verdeutlichung dienenden Beispiels zu verstehen.

Erfindungsgemäß wird vorgeschlagen, dass die zur Anlage z. B. eines Kraftspeichers, beispielsweise einer Membranfeder, dienende Formation durch einen solchen Kaltumformprozess ausgebildet wird. Man erhält dadurch bei entsprechender Formgebung der Formation eine Erhöhung der Steifigkeit der Anpressplatte. Diese Erhöhung ist insbesondere im Bereich der ausgebildeten Formation besonders groß, was weitere Vorteile mit sich bringt, da nunmehr höhere von der Membranfeder auf die Anpressplatte ausgeübte Flächenpresskräfte zugelassen werden können. Der an der Kupplung erreichbare Reibschluss wird somit deutlich verbessert.

Eine gemäß der vorliegenden Erfindung hergestellte Anpressplatte kann auch für eine verschleißnachstellende Druckplattenbaugruppe einer Kraftfahrzeugreibungskupplung eingesetzt werden. Eine solche Anpressplatte umfasst einen aus Blechwerkstoff gebildeten und eine Reibfläche aufweisenden Anpressplattenkörper. Erfindungsgemäß ist dann vorgesehen, dass an dem Anpressplattenkörper eine Formation zur Zentrierung einer, beispielsweise durch einen Kraftspeicher, beaufschlagten Verschleißnachstelleinrichtung angeformt ist. Für eine derartige Anpressplatte können dieselben Wirkungen erzielt werden, wie sie für Anpressplatten für einfachere, nicht verschleißnachstellende Druckplattenbaugruppen oben bereits erläutert wurden.

Erfindungsgemäß ist vorgesehen, dass die Formation wenigstens eine Auswölbung bildet und dass im Bereich der Formation auf der Reibflächenseite wenigstens eine entsprechende Vertiefung ausgebildet ist. Beispielsweise kann die Formation in der Form eines Domes bzw. mehrerer Dome ausgebildet sein. In diesem Fall bildet der Scheitelbereich des Domes bzw. bilden die Scheitelbereiche der Dome einen Anlagebereich bzw. Anlagebereiche der Formation zur Beaufschlagung, beispielsweise durch einen Kraftspeicher. Die auf der Reibflächenseite jeweils ausgebildete Vertiefung bedeutet zunächst einen Verlust an Reibfläche, der bewirkt, dass an der Reibfläche höhere Temperaturen entstehen, da die gleiche Reibarbeit wie bei einer herkömmlichen Anpressplatte aufgebracht wird. Dennoch kann sogar dieser scheinbare Nachteil einer erfindungsgemäßen Anpressplatte vorteilhaft ausgenutzt werden, weil sich nämlich ergibt, dass die Temperatur im Bereich eines Anlagebereichs deutlich geringer ist als bei einer herkömmlichen Anpressplatte. Dies ist darauf zurückzuführen, dass die sich im Bereich der Auswölbungen befindliche Luft eine geringere Wärmeleitfähigkeit aufweist, als die aus Metall bestehende Anpressplatte und deswegen wie ein Wärmeisolator wirkt. Wegen dieser geringeren Temperatur im Anlagebereich ist es bei durch einen Kraftspeicher beaufschlagten Anpressplatten beispielsweise möglich, in der Druckplattenbaugruppe preiswertere, weniger warmfeste Membranfedern als Kraftspeicher einzusetzen, da die thermische Belastung der Membranfeder konstruktionsbedingt geringer ist als bei herkömmlichen Anpressplatten.

Die Formation kann wenigstens einen sich näherungsweise in Umfangsrichtung der Anpressplatte erstreckenden länglichen Abschnitt aufweisen. Hierdurch ergibt sich der Vorteil, dass bei gleichem Abstand aller Anlagebereiche, z.B. für eine Membranfeder, vom Mittelpunkt der im Allgemeinen konzentrischen Anpressplatte die durch die Membranfeder auf die Anpressplatte übertragene Kraft gleich groß ist und somit auf die Anpressplatte eine ringsum gleichmäßig verteilte Anpresskraft einwirkt. Gleichzeitig wird durch die längliche Form eines Abschnitts eine zusätzliche Versteifung der Anpressplatte in Umfangsrichtung erzielt. Dabei kann die Formation beispielsweise nur aus einem einzigen konzentrisch um den Mittelpunkt der Anpressplatte angeordneten Ringabschnitt oder auch aus mehreren Segmenten eines solchen Rings bestehen, zwischen denen entsprechende Freiräume angeordnet sind.

Alternativ zu den sich länglich erstreckenden Abschnitten können die Abschnitte der Formation auch rund sein und näherungsweise entlang einer Umfangsrichtung der Anpressplatte angeordnet sein. Bei dieser Anordnung lässt sich auf der Anpressplatte eine gleichmäßigere Verteilung von Anlagebereichen um den Mittelpunkt der Anpressplatte herum erreichen, so dass die auf die Anpressplatte ausgeübte Kraftverteilung besonders gleichmäßig ist.

Im einfachsten Fall ist die Anpressplatte gerade so bemessen, dass eine ihrer axialen Seiten die Reibfläche bildet. Es kann jedoch auch günstig sein, wenn die Anpressplatte radial wenigstens abschnittsweise über die Reibfläche hinausreicht, denn dann können in den über die Reibfläche hinausreichenden Bereichen weitere funktionale Elemente, beispielsweise Anbringungselemente zur Verbindung der Anpressplatte mit dem Kupplungsgehäuse über Tangentialblattfedern vorgesehen sein. Weiterhin können die über die Reibfläche hinausreichenden Bereiche der Anpressplatte auch zum Speichern von an der Reibfläche entstandener Wärme dienen, da sie die Wärmekapazität der Anpressplatte erhöhen. Dies ist vor allem deswegen ein nicht zu vernachlässigender Aspekt, weil durch die Ausbildung von Auswölbungen im Bereich der Reibfläche die effektiv nutzbare Reibfläche der erfindungsgemäßen Anpressplatte geringer ist als bei herkömmlichen Anpressplatten und somit an der Reibfläche höhere Temperaturen entstehen.

Durch die höheren Temperaturen neigt die erfindungsgemäße Anpressplatte eher zu einem als Schirmung bezeichneten Effekt als herkömmliche Anpressplatten. Hierunter wird eine geringfügige Wölbung der Anpressplatte mit zunehmender Temperatur verstanden. Auch in dieser Hinsicht ist es vorteilhaft, wenn die Anpressplatte radial wenigstens abschnittsweise über die Reibfläche hinausreicht, da dadurch das mechanische Widerstandsmoment der Anpressplatte, d.h. letzten Endes die Steifigkeit, erhöht werden kann.

Eine Erhöhung der mechanischen Steifigkeit einer erfindungsgemäßen Anpressplatte kann auch dadurch erreicht werden, dass wenigstens ein Teilbereich der Anpressplatte bezüglich der Reibfläche versetzt ausgebildet ist. Die Anpressplatte weist also - in einem Axialschnitt betrachtet - Stufen, bzw. Erhöhungen und Vertiefungen, auf. Solche Versetzungen können ebenfalls sehr einfach durch Kaltumformverfahren, beispielsweise durch Tiefziehen, erzeugt werden. Im günstigsten Fall ist dies sogar im gleichen Prozess möglich, in dem auch die oben erwähnte Formation ausgebildet wird. Eine Anpressplatte mit solchen versetzten Teilbereichen ist hinsichtlich ihrer Steifigkeit mit flachen Anpressplatten vergleichbar, die wesentlich dicker sind. Da eine dünnere Anpressplatte wesentlich leichter kaltumformbar ist, ergeben sich somit neben der Gewichtsersparnis weitere deutliche Vorteile bei der Herstellung der Anpressplatte.

Der wenigstens eine bezüglich der Reibfläche versetzte Bereich kann radial am Außenrand oder/und am Innenrand der Anpressplatte angeordnet sein. Letzten Endes kann die Auswahl einer bestimmten Anordnung je nach den im Einzelfall vorliegenden Gesichtspunkten geeignet gewählt werden. Beispielsweise ermöglicht es ein am Innenbund der Anpressplatte angeordneter durchgängig axial abgesetzter Bereich, Bauraum für Nietköpfe von Reibbelagfederbefestigungen und/oder von Distanzbolzenköpfen zu erzeugen. Am Außenbund axial abgesetzte Segmente können besonders günstig zur Ausbildung von Anlagerungspunkten für Tangentialblattfedern vorgesehen sein. Es ist auch nicht erforderlich, dass die axial abgesetzten Bereiche radial durchgängig sind, sondern es reicht bereits aus, wenn einzelne axial abgesetzte Segmente vorgesehen sind. Es soll an dieser Stelle auch noch erwähnt werden, dass gerade bei Anordnung der axial abgesetzten Bereiche am Innenbund oder/und am Außenbund der Anpressplatte diese Bereiche in der Form eines durchgängigen oder segmentweise verlaufenden Kragens ausgebildet sein können, der beispielsweise durch Tiefziehen oder auch durch Biegen hergestellt sein kann.

Dem Schirmeffekt kann auch dadurch vorgebeugt werden, dass die Reibfläche konisch verläuft, so dass die bei hohen Temperaturen auftretende leichte Wölbung der Reibfläche in etwa kompensiert wird.

Eine zusätzliche oder/und alternative Maßnahme kann darin bestehen, dass die erfindungsgemäße Anpressplatte wenigstens einen von einem radial inneren zu einem radial äußeren Bereich verlaufenden Rippenabschnitt umfasst. Ein solcher Rippenabschnitt kann bevorzugt ebenfalls durch einen Kaltumformprozess, beispielsweise durch Tiefziehen, ausgebildet werden. Da der Rippenabschnitt so angeordnet ist, dass er auf jeden Fall auch eine radial verlaufende Komponente enthält, lässt sich durch eine derartige Versetzung eine Verformung der Reibfläche längs einer radialen Richtung, wie dies etwa bei der Schirmung der Fall ist, besonders wirksam unterdrücken. Wenn die Formation zur Beaufschlagung durch beispielsweise einen Kraftspeicher bzw. zur Zentrierung einer, beispielsweise durch einen Kraftspeicher, beaufschlagten Verschleißnachstelleinrichtung längliche Abschnitte aufweist, die näherungsweise entlang einer Umfangsrichtung der Anpressplatte angeordnet sind, ist es günstig, wenn der wenigstens eine Rippenabschnitt einen Abschnitt der Formation schneidet. In diesem Falle können Verformungen der Reibfläche sowohl in radialer Richtung als auch in einer Umfangsrichtung der Anpressplatte unterdrückt sein. Die Höhe eines Rippenabschnitts kann zur Erreichung einer optimalen Steifigkeit geeignet gewählt werden. Grundsätzlich ergibt sich eine größere Steifigkeit, je höher der Rippenabschnitt ist. Vor allem im Kreuzungsbereich mit einem Abschnitt der Formation ist daher eine möglichst große Höhe des Rippenabschnitts von Vorteil.

Es ist günstig, wenn der beim Betrieb der Kupplung entstehende entstehende Reibbelagabrieb abgeführt wird. Hierfür kann vorgesehen sein, dass an der Anpressplatte auf der Reibflächenseite wenigstens eine, vorzugsweise radial nach außen hin offene Vertiefung ausgebildet ist. Durch eine solche, eine Rille bildende Vertiefung kann der Reibbelagabrieb nach außen abgeführt werden, so dass er den Reibkontakt nicht behindert. Wenn die Formation zur Beaufschlagung, beispielsweise durch einen Kraftspeicher, bzw. zur Zentrierung einer, beispielsweise durch einen Kraftspeicher, beaufschlagten Verschleißnachstelleinrichtung domförmige Auswölbungen umfasst, die im Bereich der Reibfläche angeordnet sind, kann sich der Abrieb des Kupplungsbelages in diesem Dom sammeln. In diesem Fall ist es günstig, wenn die Vertiefung einen solchen Auswölbungsabschnitt der Formation schneidet. Auch kann der wenigstens eine Rippenabschnitt im Bereich einer Vertiefung ausgebildet sein. Es bietet sich in diesem Fall an, den Rippenabschnitt durch Tiefziehen zu erzeugen, weil dann auf der der Rippe gegenüber liegenden Seite gleichzeitig eine Vertiefung entsteht.

Es ist grundsätzlich vorgesehen, dass an der Anpressplatte wenigstens ein Anbringungsbereich für eine Blattfederanordnung bzw. eine Tangentialblattfederanordnung vorgesehen ist. Für die Anordnung eines solchen Anbringungsbereichs stehen, wie auch bei den herkömmlichen Anpressplatten, vielfältige Möglichkeiten zur Verfügung, die je nach Druckplattenbaugruppe ausgewählt werden können.

Ein einzelnes Blattfederelement kann beispielsweise mittels einer Nietverbindung an der Anpressplatte befestigt werden. Wird hierfür als Verbindungselement ein gewöhnlicher Niet verwendet und liegt der Anbindungspunkt für das Blattfederelement im Bereich der Reibfläche, so muss für den Setz- bzw. Schließkopf dieser Bereich axial von der Reibfläche abgesetzt sein, weil der Kopf nicht aus der Reibfläche hervorstehen darf. In diesem Fall bietet sich jedoch auch eine weitere Möglichkeit zur Befestigung eines Blattfederelements an, welche darin besteht, dass der wenigstens eine Anbringungsbereich für eine Blattfederanordnung einen daran angeformten Fortsatz umfasst. Dieser angeformte Fortsatz dient als integral mit der Anpressplatte verbundener Niet, so dass kein separates Verbindungselement verwendet werden muss. Er kann ebenfalls einfach durch Tiefziehen hergestellt werden. Da ein solcher Tiefziehschritt ohnehin erforderlich ist, braucht somit die Herstellung der erfindungsgemäßen Anpressplatte nicht aufwändiger zu werden. Es sei aber an dieser Stelle noch einmal betont, dass der hier beschriebene angeformte Schließkopf natürlich auch bei allen anderen denkbaren Anordnungen für die Anordnung eines Anbringungsbereichs für eine Blattfederanordnung einsetzbar ist.

Zur Herstellung einer erfindungsgemäßen Anpressplatte für eine Druckplattenbaugruppe einer Kraftfahrzeugreibungskupplung ist ein Verfahren vorgesehen, welches die folgenden Schritte umfasst:
a) Bilden eines Blechrohlings für einen eine Reibfläche bereitstellenden Anpressplattenkörper und
b) Tiefziehen des Blechrohlings zum Bereitstellen einer Formation zur Beaufschlagung, beispielsweise durch einen Kraftspeicher, oder zur Zentrierung einer, beispielsweise durch einen Kraftspeicher, beaufschlagten Verschleißnachstelleinrichtung.

Der Blechrohling wird bevorzugt aus einem geeigneten Stahl hergestellt, beispielsweise indem aus einem Grundblech eine ringförmige Struktur ausgestanzt wird, welche den Rohling für den Anpressplattenkörper bildet.

Neben dem Ausbilden einer Formation zur Beaufschlagung, beispielsweise durch einen Kraftspeicher, oder zur Zentrierung einer, beispielsweise durch einen Kraftspeicher, beaufschlagten Verschleißnachstelleinrichtung kann Schritt b) ferner auch das Ausbilden eines von der Reibfläche zurückgesetzten Abschnitts oder/und das Ausbilden wenigstens eines von einem radial inneren zu einem radial äußeren Bereich verlaufenden Rippenabschnitts und das Ausbilden einer Vertiefung im Bereich des wenigstens einen Rippenabschnitts auf der Reibflächenseite oder/und das Ausbilden wenigstens einer radial nach außen hin offenen Vertiefung auf der Reibflächenseite oder/und das Anformen wenigstens eines Fortsatzes an dem Anpressplattenkörper zur Anbringung einer Blattfederanordnung umfassen.

Alle genannten Verfahrensschritte können durch ein Kaltumformverfahren realisiert werden. Somit ist es möglich, die komplette Anpressplatte in einem einheitlichen Verfahren, beispielsweise einem Tiefziehprozess, herzustellen. Je nach Einzelfall kann dabei die Anpressplatte einen oder mehrere miteinander verkettete Arbeitsgänge durchlaufen. Insgesamt ergibt sich ein relativ einfacher und schnell durchführbarer Herstellungsprozess für die erfindungsgemäße Anpressplatte. Da dieser Herstellungsprozess im Wesentlichen lediglich Umformvorgänge beinhaltet, sind kleine Herstellungstoleranzen erreichbar, so dass auf weitere Bearbeitungsverfahren, insbesondere auf spanabhebende Verfahren, nach Durchführen der Umformprözesse verzichtet werden kann.

Die vorliegende Erfindung betrifft ferner eine Druckplattenbaugruppe für eine Kraftfahrzeugreibungskupplung, bei der eine erfindungsgemäße Anpressplatte vorgesehen ist.

Die vorliegende Erfindung wird nachfolgend mit Bezug auf die beiliegenden Zeichnungen anhand bevorzugter Ausgestaltungsformen detailliert beschrieben. Es zeigt:
- Fig. 1: eine Teillängsschnittansicht einer ersten Ausgestaltungsform einer Druckplattenbaugruppe mit einer erfindungsgemäßen Anpressplatte;
- Fig. 2: eine Draufsicht auf die in Fig. 1 gezeigte erste Ausgestaltungsform der erfindungsgemäßen Anpressplatte mit längliche, domförmige Abschnitte umfassender Beaufschlagungsformation;
- Fig. 3: eine Längsschnittansicht der rechten Hälfte der ersten Ausgestaltungsform der erfindungsgemäßen Anpressplatte;
- Fig. 4: eine Teildraufsicht einer weiteren Ausgestaltungsform der erfindungsgemäßen Anpressplatte mit runde, domförmige Abschnitte umfassender Beaufschlagungsformation;
- Fig. 5: eine Querschnittsansicht der rechten Hälfte einer weiteren Ausführungsform der erfindungsgemäßen Anpressplatte mit radial außerhalb der Reibfläche ausgebildeter Beaufschlagungsformation;
- Fig. 6: eine Querschnittsansicht der rechten Hälfte einer weiteren AusgestaltungsformdererfindungsgemäßenAnpressplattemit radial innerhalb der Reibfläche ausgebildeter Beaufschlagungsformation;
- Fig. 7: eine Querschnittsansicht der rechten Hälfte einer weiteren Ausgestaltungsform der erfindungsgemäßen Anpressplatte mit axial von der Reibfläche abgesetztem Innenrand und Beaufschlagungsformation;
- Fig. 8: eine Querschnittsansicht der rechten Hälfte einer weiteren Ausgestaltungsform der erfindungsgemäßen Anpressplatte mit axial von der Reibfläche abgesetzter,' am Innenrand angeordneter Beaufschlagungsformation;
- Fig. 9: eine Querschnittsansicht der rechten Hälfte einer weiteren Ausgestaltungsform der erfindungsgemäßen Anpressplatte mit axial von der Reibfläche abgesetztem, durchgängigem Innenrand;
- Fig. 10: eine Querschnittsansicht der rechten Hälfte einer weiteren Ausgestaltungsform der erfindungsgemäßen Anpressplatte mit axial von der Reibfläche abgesetztem, segmentweise ausgebildetem Innenrand;
- Fig. 11: eine Querschnittsansicht der rechten Hälfte einer weiteren Ausgestaltungsform der erfindungsgemäßen Anpressplatte mit am Innenrand ausgebildetem Kragen;
- Fig. 12a: eine Querschnittsansicht der rechten Hälfte einer weiteren Ausgestaltungsform der erfindungsgemäßen Anpressplatte mit angeformtem Rippenabschnitt;
- Fig. 12b: eine perspektivische Teilansicht der in Fig. 12a gezeigten Ausgestaltungsform der erfindungsgemäßen Anpressplatte;
- Fig. 13a: eine Querschnittsansicht der rechten Hälfte einer weiteren Ausgestaltungsform der erfindungsgemäßen Anpressplatte mit einen Abschnitt der Formation schneidendem, angeformtem Rippenabschnitt;
- Fig. 13b: eine perspektivische Teilansicht der in (Fig. 13a gezeigten Ausgestaltungsform der erfindungsgemäßen Anpressplatte;
- Fig. 14a: eine perspektivische Teilansicht einer weiteren Ausgestaltungsform der erfindungsgemäßen Anpressplatte mit auf der Reibflächenseite ausgebildeten, radial nach außen offenen Vertiefungen, gesehen von der Reibflächenseite her;
- Fig. 14b: eine perspektivische Teilansicht der in Fig. 14a gezeigten Ausgestaltungsform der erfindungsgemäßen Anpressplatte, von der der Reibflächenseite gegenüber liegenden Seite her gesehen;
- Fig. 15a - 15d: perspektivische Teilansichten von erfindungsgemäßen Anpressplatten mit am Außenrand bzw. Innenrand vorgesehenen Bereichen zur Befestigung von Tangentialblattfedern;
- Fig. 16: eine Teilquerschnittsansicht der erfindungsgemäßen Anpressplatte, welche eine Nietverbindung zur Befestigung einer Blattfederanordnung an der Anpressplatte zeigt;
- Fig. 17a und 17b: Teilquerschnittsansichten einer weiteren erfindungsgemäßen Anpressplatte mit an dem Anpressplattenkörper angeformtem Fortsatz zur Befestigung einer Tangentialblattfederanordnung;
- Fig. 18: eine Teilquerschnittsansicht einer erfindungsgemäßen Anpressplatte mit im Bereich der Reibfläche angeordnetem separatem Niet zur Befestigung einer Blattfederanordnung;
- Fig. 19: eine Teilquerschnittsansicht einer erfindungsgemäßen Anpressplatte mit im radial äußeren Bereich angeordnetem Anbringungsbereich für eine Blattfederanordnung;
- Fig. 20: eine Querschnittsansicht der rechten Hälfte einer weiteren Ausgestaltungsform der erfindungsgemäßen Anpressplattemit angeformter Formation zur Zentrierung einer, beispielsweise durch einen Kraftspeicher, beaufschlagten Verschleißnachstelleinrichtung.

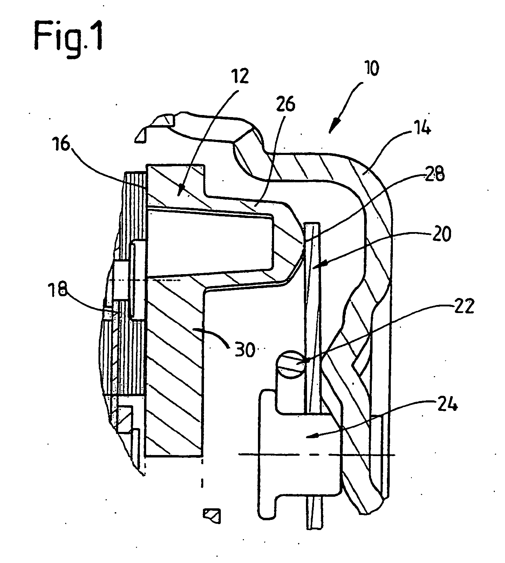

Fig. 1 zeigt im Längsschnitt einen Teil einer Druckplattenbaugruppe 10 mit einer erfindungsgemäßen Anpressplatte 12. Die Druckplattenbaugruppe 10 umfasst neben der Anpressplatte 12 ein Gehäuse 14, welches in bekannter Weise mit einem in Fig. 1 nicht dargestellten Schwungrad zum Bilden einer Kraftfahrzeugreibungskupplung drehfest verbunden werden kann. Das Gehäuse 14 ist um eine in Fig. 1 ebenfalls nicht gezeigte Achse drehbar.

Die im Gehäuse 14 angeordnete Anpressplatte 12 ist in Richtung der Drehachse verlagerbar und durch Tangentialblattfedern (in Fig. 1 nicht gezeigt) o. dgl. mit dem Gehäuse 14 drehfest verbunden. Zwischen einer Reibfläche 16 der Anpressplatte und dem Schwungrad ist eine ausschnittsweise angedeutete Kupplungsscheibe 18 im eingerückten Zustand klemmbar. Eine Membranfeder 20, welche in der dargestellten Ausgestaltungsform einen Kraftspeicher bildet, stützt sich in einem radial mittleren Bereich in an sich bekannter Weise am Gehäuse 14 und an einem Drahtring 22 ab, wobei dieser Drahtring 22 durch einen Distanzbolzen 24 am Gehäuse getragen ist. Radial außen beaufschlagt die Membranfeder 20 bei der in Fig. 1 gezeigten im Normalzustand geschlossenen Kraftfahrzeugreibungskupplung eine an der Anpressplatte 12 angeformte Formation 26, an der sie an einem Anlagebereich 28 anliegt, so dass die Anpressplatte 12 durch die von der Membranfeder 20 ausgeübte Kraft gegen die Kupplungsscheibe 18 gepresst ist.

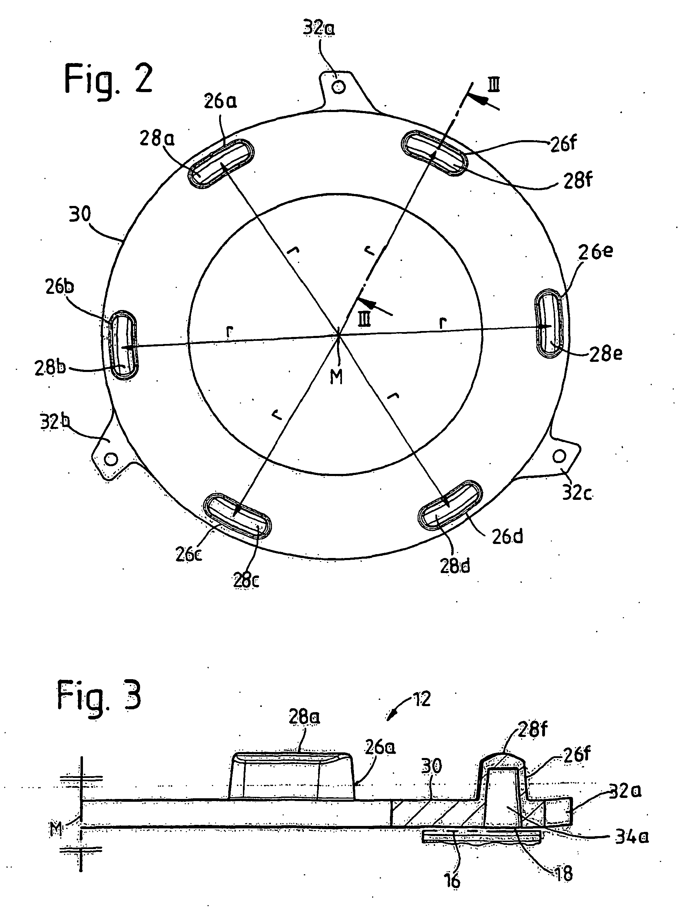

In Fig. 2 ist eine Draufsicht auf die in Fig. 1 gezeigte Ausgestaltungsform der erfindungsgemäßen Anpressplatte zu sehen. Die Anpressplatte 12 umfasst einen grundsätzlich ringförmigen Anpressplattenkörper 30 mit drei an seinem Außenrand ausgebildeten Fortsätzen 32a, 32b, 32c, die zur Anbringung je einer Tangentialblattfeder vorgesehen sind. In Fig. 2 sind weiterhin sechs konzentrisch um den Mittelpunkt M des Anpressplattenkörpers 30 angeordnete Abschnitte 26a, 26b, 26c, 26d, 26e, 26f einer am Anpressplattenkörper 30 angeformten Formation zur Beaufschlagung durch die Membranfeder 20 zu sehen. Jeder der Abschnitte 26a - 26f besitzt eine sich in Umfangsrichtung des Anpressplattenkörpers 30 erstreckende näherungsweise ovale Form und einen Auflagebereich 28a - 28f für die Membranfeder 20. Die Auflagebereiche 28a - 28f der Abschnitte 26a - 26f verlaufen jeweils in einem konstanten Abstand r vom Mittelpunkt M des Anpressplattenkörpers 30, so dass die Membranfeder 20 auf alle Abschnitte 26a - 26f in etwa die gleiche Kraft ausübt. Es sei noch angefügt, dass die Anzahl von am Anpressplattenkörper angeformten Abschnitten der Beaufschlagungsformation je nach Bedingungen frei gewählt werden kann.

In Fig. 3 ist eine Querschnittsansicht entlang der Linie III-III in Fig. 2 des rechten Teils der in Fig. 2 gezeigten Ausgestaltungsform der erfindungsgemäßen Anpressplatte 12 gezeigt. In Fig. 3 ist der Anpressplattenkörper 30 zu sehen sowie die an ihm angeformten Abschnitte 26a, 26f zur Beaufschlagung durch die Membranfeder 20. Außerdem ist in Fig. 3 die mit der am Anpressplattenkörper 30 ausgebildeten Reibfläche 16 zusammenwirkende Kupplungsscheibe 18 schematisch angedeutet. Bei der in Fig. 3 gezeigten Anpressplatte 12 sind die Abschnitte 26a - 26f jeweils im Bereich der Reibfläche 16 ausgebildet. Sie weisen eine domartige Form auf mit einer Auswölbung 26a - 26f, die zum Kupplungsgehäuse 14 hin vorsteht und auf der Seite der Reibfläche 16 im Bereich der Reibfläche eine Vertiefung 34a - 34f bildet.

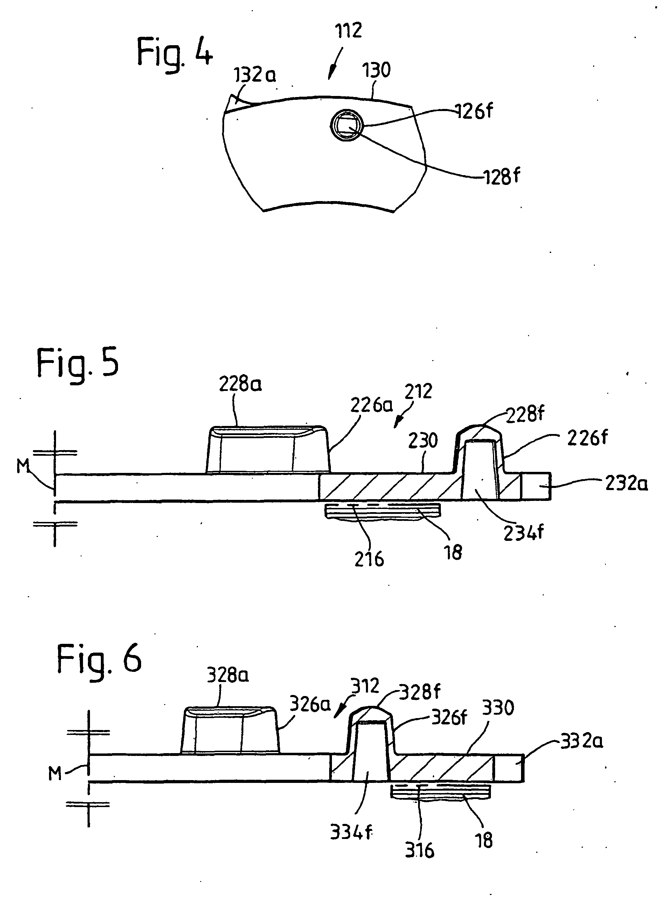

In Fig. 4 ist eine weitere Ausgestaltungsform 112 der erfindungsgemäßen Anpressplatte in einer Draufsicht ausschnittsweise gezeigt. Komponenten der in Fig. 4 gezeigten Anpressplatte 112, welche identisch mit denjenigen der in Fig. 2 gezeigten Ausgestaltungsform sind bzw. welche hinsichtlich ihrer Funktion solchen in Fig. 2 gezeigten entsprechen, sind mit denselben Bezugszeichen, jeweils erhöht um 100, bezeichnet. Die Anpressplatte 112 weist einen Hauptkörper 130 mit einer Mehrzahl von daran angeordneten Abschnitten einer Formation zur Beaufschlagung durch eine Membranfeder 20 auf, von denen ein Abschnitt 126a in Fig. 4 gezeigt ist. Der Abschnitt 126a weist eine runde Form auf, im Gegensatz zu der langgestreckten Form der entsprechenden Abschnitte 26a - 26f bei der in Fig. 2 gezeigten Ausgestaltungsform. Hinsichtlich ihrer weiteren Merkmale unterscheiden sich die in Fig. 2 und Fig. 4 gezeigten Ausführungsformen nicht.

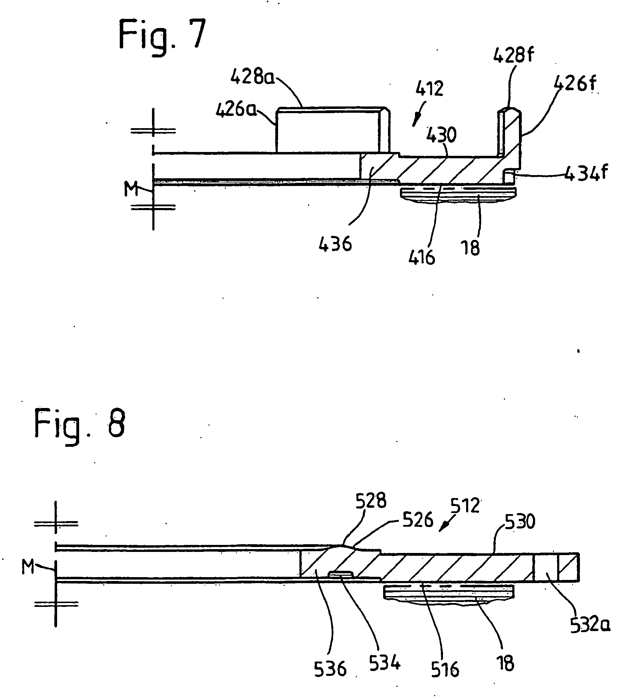

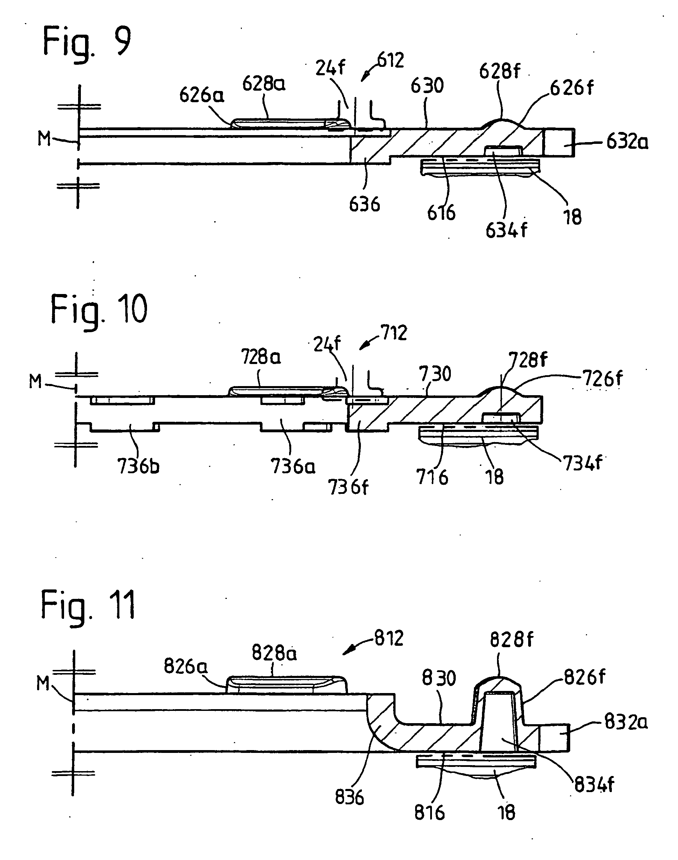

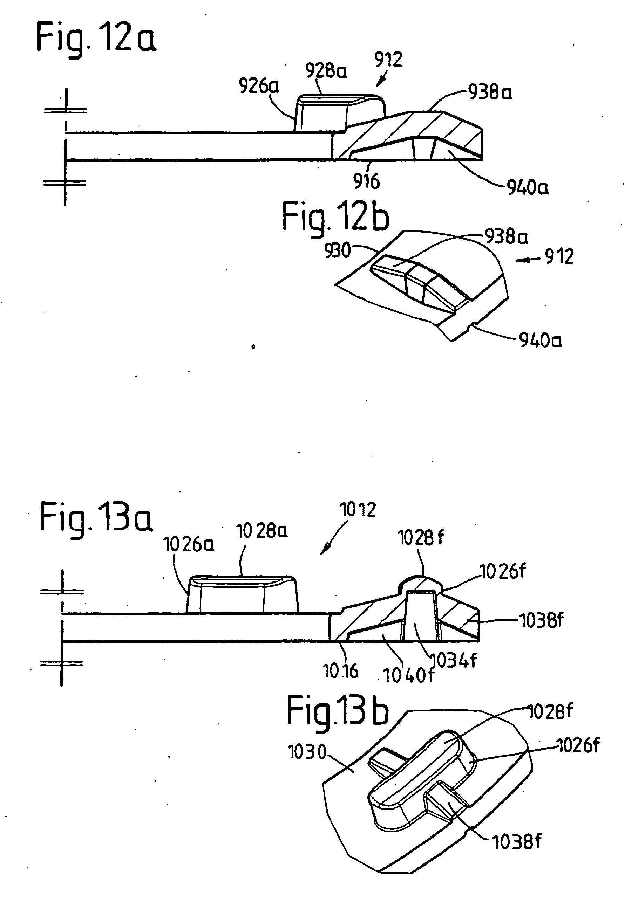

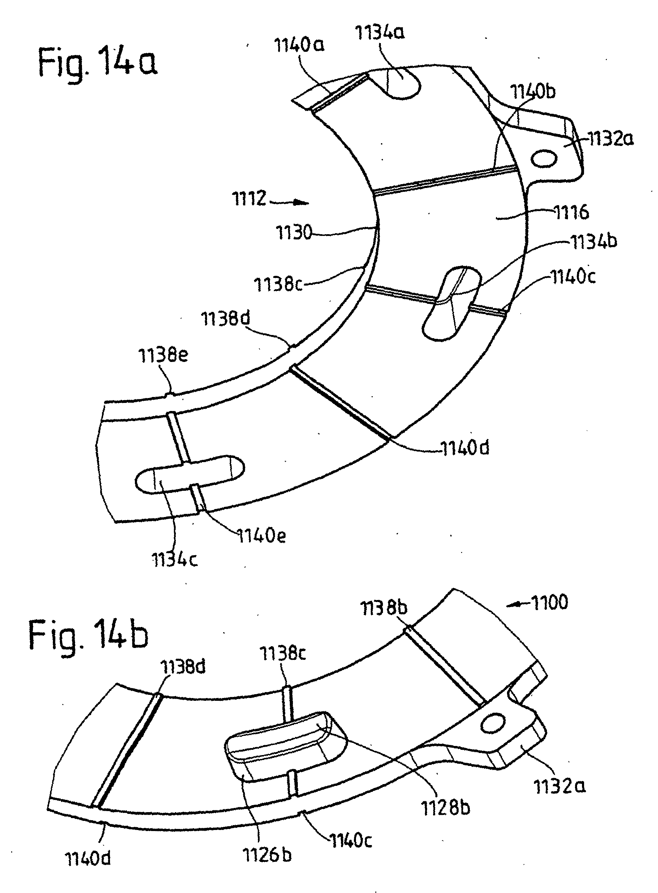

Weitere Ausgestaltungsformen der erfindungsgemäßen Anpressplatte sind in den Fig. 5, 6, 7, 8, 9, 10, 11, 12, 13 und 14 jeweils in einer der Fig. 3 ähnlichen Querschnittsansicht der rechten Hälfte der Anpressplatte gezeigt. Auch hierbei weisen Komponenten, welche zu solchen der in Fig. 3 gezeigten Ausführungsform identisch sind bzw. deren Funktion solchen entspricht, dieselben Bezugszeichen, jeweils erhöht um 200 (Fig. 5), 300 (Fig. 6), 400 (Fig. 7), 500 (Fig. 8), 600 (Fig. 9), 700 (Fig. 10), 800 (Fig. 11), 900 (Fig. 12), 1000 (Fig. 13), 1100 (Fig. 14) auf. Auf eine Beschreibung der mit der in Fig. 3 gezeigten Ausgestaltungsform identischen Komponenten wird verzichtet und stattdessen auf die Beschreibung der Fig. 3 verwiesen.

Die in Fig. 5 gezeigte Ausgestaltungsform 212 der erfindungsgemäßen Anpressplatte unterscheidet sich von der in Fig. 3 gezeigten dadurch, dass die Formation zur Beaufschlagung durch die Membranfeder 20 durch Abschnitte 226a - 226f gebildet ist, die sich in Bezug auf die Reibfläche 216 radial außen befinden, so dass die Vertiefungen 234a - 234f freiliegen. Auch bei der in Fig. 6 gezeigten Ausgestaltungsform 312 der erfindungsgemäßen Anpressplatte liegen die Vertiefungen 334a - 334f der Formation zur Beaufschlagung durch die Membranfeder 20 frei. Im Unterschied zu der in Fig. 5 gezeigten Ausgestaltungsform 212 sind hier jedoch die Abschnitte 326a - 326f radial innerhalb der Reibfläche 316 angeordnet.

Der in Fig. 5 gezeigten Anpressplatte 212 und der in Fig. 6 gezeigten Anpressplatte 312 ist gemeinsam, dass die Reibfläche 216, 316 nicht durch Vertiefungen 234a - 234f, 334a - 334f im Bereich der Formation 226a - 226f, 326a - 326f durchbrochen ist. Damit entspricht insbesondere die Temperatur an der Reibfläche derjenigen von herkömmlichen Anpressplatten. Die in Fig. 5 gezeigte Anpressplatte 212 mit radial außen angeordneter Formation 226a - 226f eignet sich besonders für Kraftfahrzeugreibungskupplungen des "gedrückten" Typs, bei denen durch Drücken des radial inneren Bereichs der Membranfeder in Richtung zur Anpressplatte hin die Kupplung ausgerückt wird. Demgegenüber wird die in Fig. 6 gezeigte Anpressplatte 312 mit radial innen angeordneter Formation 326a - 326f vor allem bei Kraftfahrzeugreibungskupplungen des "gezogenen" Typs verwendet, bei denen die Membranfeder radial außen am Kupplungsgehäuse befestigt ist und die Kupplung durch Ziehen des radial inneren Bereichs der Membranfeder in axialer Richtung von der Anpressplatte 312 weg ausgerückt wird.

Insbesondere bei einer Kraftfahrzeugreibungskupplung des "gedrückten" Typs ist wegen der Höhe des dann in der Regel im Bereich der Reibfläche angeordneten Distanzbolzens und des Durchmessers des Drahtrings sowie, um den gewünschten Anpressplattenabhub erreichen zu können, eine gewisse Mindesthöhe der Formation notwendig.

Bei den in Fig. 1 - 6 gezeigten Ausgestaltungsformen der erfindungsgemäßen Anpressplatte haben die Abschnitte der Formation zur Beaufschlagung durch die Membranfeder 20 jeweils eine domförmige Gestalt, d.h. sie wölben sich auf der dem Kupplungsgehäuse 14 zugewandten Seite der Anpressplatte 12, 112, 212, 312 nach außen und weisen auf der gegenüber liegenden Seite eine Vertiefung auf.

Bei der in Fig. 7 gezeigten Ausgestaltungsform 412 der erfindungsgemäßen Anpressplatte sind die Abschnitte 426a - 426f, welche die Anlageformation bilden, am Außenbund des Anpressplattenkörpers 430 angeordnet. Im Gegensatz zu den bisher genannten Ausgestaltungsvarianten der erfindungsgemäßen Anpressplatte ist bei der Ausgestaltungsform 412 nach Fig. 7 die Dicke des Anpressplattenkörpers 430 im Bereich der Abschnitte 426a - 426f größer als in den übrigen Bereichen des Anpressplattenkörpers. Durch die größere Dicke im Bereich der Abschnitte 426a - 426f des Anpressplattenkörpers 430 wird eine Verbesserung der Steifigkeit sowie der Wärmekapazität der Anpressplatte 412 in diesem Bereich erreicht. Ein weiteres Merkmal der in Fig. 7 zu sehenden Ausgestaltungsform 412 einer erfindungsgemäßen Anpressplatte liegt darin, dass der dem Innenrand benachbarte Bereich 436 des Anpressplattenkörpers 430 gegenüber der Reibfläche 416 axial in Richtung zum Kupplungsgehäuse 14 hin versetzt ist. Dieser Versatz, der radial durchgängig ausgeführt ist, dient ebenso einer Erhöhung der Steifigkeit der Anpressplatte 412, um insbesondere dem Schirmeffekt (d.h. dem Auftreten einer Wölbung der Reibfläche 416 in radialer Richtung mit ansteigender Temperatur der Reibfläche 416) entgegenzuwirken.

Auch in Fig. 8 ist eine Ausgestaltungsform 512 der erfindungsgemäßen Anpressplatte gezeigt, bei der am Innenbund des Anpressplattenkörpers 530 ein Bereich radial von der Reibfläche 516 abgesetzt ist. Dieser Bereich 526 dient der Anformung der Beaufschlagungsformation, beispielsweise zur Beaufschlagung durch eine Membranfeder 20, die nach Einbau der Anpressplatte 512 an dem Anlagebereich 528 anliegt. Gegenüber der in Fig. 7 gezeigten Ausgestaltungsform 412 ist hier die Beaufschlagungsformation 526, die gleichzeitig an einem axial von der Reibfläche zurückgesetzten Bereich 536 angeformt ist, in Umfangsrichtung durchgehend ausgebildet, während dies bei der in Fig. 7 gezeigten Ausgestaltungsform lediglich segmentweise der Fall ist. Außerdem ist die Höhe, um die der Anlagebereich 528 gegenüber dem Anpressplattenkörper 530 vorsteht, wesentlich niedriger als bei den in Fig. 3, 5, 6 oder 7 gezeigten Ausgestaltungsvarianten. Dies ist deshalb möglich, weil bei der in Fig. 8 gezeigten Anpressplatte 512, die bevorzugt für eine Kraftfahrzeugreibungskupplung des "gezogenen" Typs vorgesehen ist, kein Distanzbolzen 24 und kein Drahtring 22 zur Lagerung der Membranfeder 20 benötigt werden, so dass deren Dicke auf die notwendige Höhe des Anlagebereichs 528 gegenüber dem Anpressplattenkörper 530 keinen Einfluss hat. Grundsätzlich ist eine möglichst geringe Höhe des Anlagebereichs 528 wünschenswert, da bei größeren Höhen die Gefahr von Fehlern beim Umformprozess steigt.

Weitere Ausgestaltungsformen der erfindungsgemäßen Anpressplatte sind in den Fig. 9 bis 11 gezeigt. Bei den dort gezeigten Ausgestaltungsformen 612, 712, 812 sind unterschiedliche Varianten von axial gegenüber der Reibfläche (jeweils 616, 716, 816) versetzten Innenbünden (jeweils 636, 736a - 736h, 836) des Anpressplattenkörpers (jeweils 630, 730, 830) zu erkennen. Bei der in Fig. 9 zu sehenden Ausgestaltungsform 612 ist der radial über die Reibfläche 616 hinausgehende Innenbund 636 des Anpressplattenkörpers 630 in Richtung zum Schwungrad hin axial versetzt, so dass auf der dem Kupplungsgehäuse 14 zugewandten Seite des Anpressplattenkörpers eine Vertiefung entsteht. Diese radial umlaufende Vertiefung dient als Bauraum für die Distanzbolzen 24a - 24f. An dieser Stelle sei erwähnt, dass darüber hinaus solche axial in Richtung zum Kupplungsgehäuse bzw. in Richtung zum Schwungrad abgesetzten Bereiche auch benutzt werden können, um Bauraum für andere funktionale Elemente, etwa den Nietkopf einer Tangentialblattfeder bzw. Belagsfederbefestigung, zu schaffen. Die in Fig. 10 gezeigte Ausgestaltungsform 712 ist der in Fig. 9 gezeigten sehr ähnlich. Sie unterscheidet sich lediglich darin, dass der Innenbund des Anpressplattenkörpers 730 nicht durchgängig axial abgesetzt ist, sondern lediglich im Bereich der Segmente 736a - 736f.

Der Innenbund 836 der in Fig. 11 gezeigten Ausgestaltungsform 812 einer erfindungsgemäßen Anpressplatte ist wiederum durchgängig axial abgesetzt. Er ist jedoch nicht, wie in den bisher genannten Ausgestaltungsformen zu sehen, durch Tiefziehen gebildet, sondern ist in Richtung des Kupplungsgehäuses 14 umgebogen, so dass ein Kragen entsteht. Auch auf diese Weise lässt sich die Steifigkeit der Anpressplatte 812 erhöhen und somit der Schirmung entgegenwirken.

Auch die in Fig. 12a und 12b gezeigte Ausgestaltungsform 912 der erfindungsgemäßen Anpressplatte ermöglicht es, die Steifigkeit der Anpressplatte 912 zu verbessern und so das Auftreten von Schirmung zu verhindern. Bei der Ausgestaltungsform 912 sind neben den Abschnitten 926a - 926f (in Fig. 12 ist nur der Abschnitt 926a gezeigt) zur Bildung der Formation zur Beaufschlagung durch die Membranfeder 20 Rippenabschnitte ausgebildet, von denen in Fig. 12a und Fig. 12b der Rippenabschnitt 938a beispielhaft bezeichnet ist. Der Rippenabschnitt 938a verläuft ungefähr in radialer Richtung und bildet ähnlich wie die Anlageabschnitte 926a - 926f eine Auswölbung hin zum Kupplungsgehäuse 14. Der Rippenabschitt 938a ist ebenfalls durch Tiefziehen des Anpressplattenkörpers 930 hergestellt, so dass auf der Reibflächenseite 916 im Bereich des Rippenabschnitts 938a eine entsprechende Vertiefung 940a ausgebildet ist. Entlang des Umfangs des Anpressplattenkörpers 930 können einer oder eine beliebige Mehrzahl solcher Rippenabschnitte 938 ausgebildet sein. Natürlich ist der Gewinn an Steifigkeit umso größer, je mehr Rippenabschnitte 938 ausgebildet sind. Diese Rippenabschnitte müssen nicht unbedingt wie bei der in Fig. 12a und 12b gezeigten Ausgestaltungsform exakt in radialer Richtung verlaufen, sondern es genügt, wenn sie sich von einem radial inneren zu einem radial äußeren Bereich des Anpressplattenkörpers 930 erstrecken, um zu verhindern, dass sich die Anpressplatte 912 in radialer Richtung verformt. Der Gewinn an Steifigkeit wird umso größer, je höher der Rippenabschnitt ausgebildet ist. Der in Fig. 12a und 12b abgebildete Rippenabschnitt 938a weist seine maximale Höhe im radial mittleren Bereich des Anpressplattenkörpers 930 auf. Dies stellt einen guten Kompromiss zwischen guter Versteifungswirkung und zuverlässiger Herstellbarkeit dar. In Fig. 12b ist weiterhin zu erkennen, dass die Vertiefung 940a im Bereich des Rippenabschnitts 938a zur radial äußeren Seite des Anpressplattenkörpers 930 hin offen ist. Damit kann Schmutz, beispielsweise Abrieb, von der Reibfläche 916, der sich im Bereich der Vertiefung 940a angesammelt hat, durch diese Öffnung nach außen abgeführt werden.

Eine weitere Ausgestaltungsform 1012 der erfindungsgemäßen Anpressplatte, bei der sich die Abschnitte 1026, welche die Formation zur Beaufschlagung durch die Membranfeder 20 bilden, jeweils mit einem Rippenabschnitt 1028 überkreuzen, ist in Fig. 13a und Fig. 13b gezeigt. Bei dieser Anpressplatte 1012 ist auf der Reibflächenseite 1016 also im Bereich je eines sich überkreuzenden Anlageabschnitts 1026f und eines Rippenabschnitts 1038f, eine vergleichsweise große Vertiefung 1034f, 1040f ausgebildet, in der sich auch größere Mengen von Schmutz ansammeln können. Da der Rippenabschnitt 1038f zur radial äußeren Seite des Anpressplattenkörpers 1030 hin offen ist, kann dieser Schmutz auch wirksam abgeführt werden. Die Überkreuzstruktur des Rippenabschnitts 1038f und des ihm zugeordneten Anlageabschnitts 1026f bewirkt eine optimale Steifigkeit und Stabilität der Anpressplatte 1012 sowohl in radialer als auch in Umfangsrichtung der Anpressplatte 1012. Dies ist umso mehr der Fall, als der Rippenabschnitt 1038f gerade in diesem Bereich seine maximale Höhe aufweist.

In den Fig. 14a und 14b ist eine weitere Ausgestaltungsform 1112 einer erfindungsgemäßen Anpressplatte gezeigt, bei der eine Mehrzahl von auf der dem Kupplungsgehäuse 14 zugewandten Seite ausgebildeten Rippenabschnitten 1138a - 1138e und ihnen zugeordneten Vertiefungen 1140a - 1140e auf der Reibflächenseite 1116 sowie eine Mehrzahl von eine Formation zur Beaufschlagung durch eine Membranfeder 22 bildende Abschnitte 1126a - 1126c mit ihnen zugeordneten Vertiefungen 1134a - 1134c auf der Reibflächenseite 1116 besonders vorteilhaft miteinander kombiniert sind. Die Rippenabschnitte 1138a - 1138e sind stegförmig und radial verlaufend ausgebildet, und dementsprechend sind die Vertiefungen 1140a - 1140e rillenförmig und ebenfalls radial verlaufend ausgebildet. Da die Vertiefungen 1140a - 1140e radial sowohl nach innen als auch nach außen hin offen sind, kann über diese Rillen im Bereich der Reibfläche entstehender Schmutz abgeführt werden. Jede zweite dieser Rillen 1140a, 1140c, 1140e bzw. Stege 1138a, 1138c, 1138e schneidet einen der Abschnitte 1126a - 1126c zur Beaufschlagung durch die Membranfeder 22. Somit kann auch Schmutz, der sich im Bereich der domförmigen Vertiefungen 1134a - 1134c angesammelt hat, über die entsprechende Rille 1140a, 1140c, 1140e abgeführt werden. Auch bei dieser Ausführungsform der erfindungsgemäßen Anpressplatte ist eine gewisse Versteifung in radialer Richtung durch die Stege 1138a - 1138e sowie in Richtung des Umfangs der Anpressplatte 1116 durch die Anlageabschnitte 1134a - 1134c gegeben.

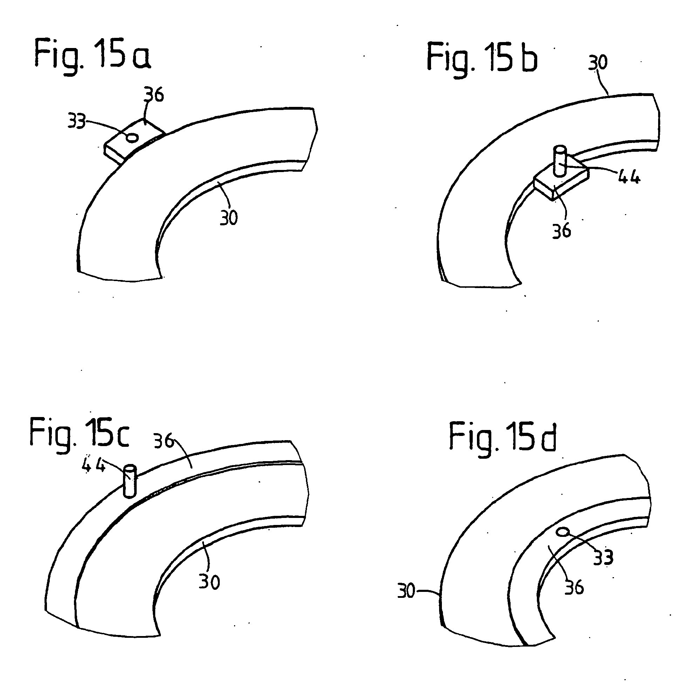

Für alle Ausgestaltungsformen der erfindungsgemäßen Anpressplatte können Anbringungsbereiche zur Befestigung von Blattfedereinheiten vorgesehen sein, mittels derer die Anpressplatte mit dem Kupplungsgehäuse 14 drehfest verbunden ist. Fig. 15 zeigt verschiedene Gestaltungsvarianten für die Anordnung eines solchen Anbringungsbereichs am Anpressplattenkörper sowie für dessen Ausgestaltung. Grundsätzlich kann jede dieser Varianten mit jeder der zuvor genannten Ausführungsvarianten der erfindungsgemäßen Anpressplatte kombiniert werden. In Fig. 15a ist zu sehen, dass der Anbringungsbereich als axial gegenüber dem Anpressplattenkörper 30 versetzter Nocken 36 am radial äußeren Rand des Anpressplattenkörpers 30 angeordnet sein kann. Der in Fig. 15a gezeigte Nocken 36 weist ein Loch 33 auf, durch das ein Niet geführt werden kann. In Fig. 15b ist zu sehen, dass der axial abgesetzte Nocken 36 auch an der radial inneren Seite des Anpressplattenkörpers 30 ausgebildet sein kann. Weiterhin ist in Fig. 15b zu sehen, dass zur Anbringung der Tangentialblattfederanordnung auch ein Fortsatz 44 an dem Nocken 36 angeformt sein kann. Dieser Fortsatz 44 kann in einfacher Weise ebenfalls durch Tiefziehen hergestellt sein. Er übernimmt die Funktion des Nietes. Aus den Fig. 15c und 15d ist entnehmbar, dass der Anbringungsbereich zur Anbringung einer Tangentialblattfederanordnung auch durchgängig ausgebildet sein kann, entweder als radial äußerer axial abgesetzter Randbereich 36 des Anpressplattenkörpers 30 (Fig. 15c) oder als radial innerer axial abgesetzter Randbereich 36 des Anpressplattenkörpers 30 (Fig. 15d). Die in Fig. 15 gezeigten Anbringungsbereiche 36 für eine Tangentialblattfederanorndung sind alle axial gegenüber dem Anpressplattenkörper 30 versetzt ausgebildet. Je nach Einzelfall ist es selbstverständlich auch möglich, auf einen solchen axialen Versatz zu verzichten (siehe beispielsweise die in den Fig. 2, 3, 4, 5, 6, 8, 9, 14 abgebildeten Anbringungsbereiche 32a, 232a, 332a, 432a, 632a, 832a und 1132a). Es sei außerdem der Vollständigkeit halber noch erwähnt, dass der Anbringungsbereich für eine Tangentialblattfederanordnung nicht zwangsläufig am äußeren oder inneren Rand des Anpressplattenkörpers ausgebildet sein muss, sondern es durchaus auch denkbar ist, eine solche Tangentialblattfederanordnung radial im Bereich der Reibfläche zu befestigen.

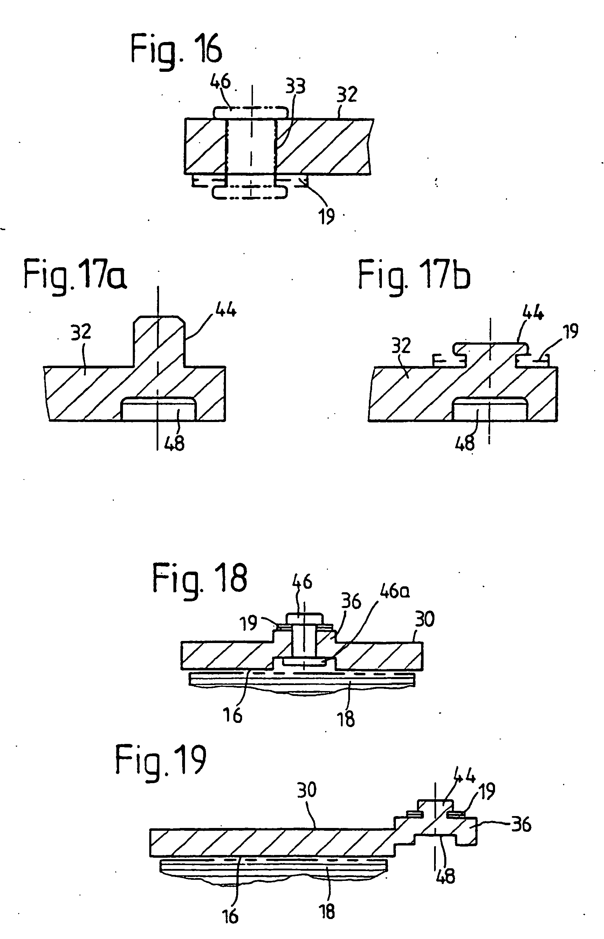

Anhand der Fig. 16 bis 19 sollen die verschiedenen Möglichkeiten zur Befestigung einer Tangentialblattfederanordnung 19 nochmals detaillierter dargestellt werden. In Fig. 16 ist die Tangentialblattfeder 19 mittels eines Nietes 46, der ein im Anbringungsbereich für die Tangentialblattfeder 19 ausgebildetes Loch 33 durchsetzt, befestigt, wie es herkömmlicherweise bekannt ist. Demgegenüber zeigen die Fig. 17a und 17b eine weitere Befestigungsvariante, bei der am Anbringungsbereich 32 für eine Tangentialblattfeder 19 ein Fortsatz 44 angeformt ist, der die Funktion des herkömmlicherweise verwendeten Nietes übernimmt. Ein solcher Fortsatz 44 ist beispielsweise bei einem Tiefziehprozess, dem die Anpressplatte gemäß der vorliegenden Erfindung ohnehin unterzogen wird, relativ einfach herzustellen. Eine Öse der Tangentialblattfeder 19 wird über den Fortsatz 44 gelegt, woraufhin dieser zu einem Nietkopf geformt wird, so dass die Tangentialblattfeder 19 am Anbringungsbereich 32 befestigt ist. Bei dieser Variante ist es ohne weiteres möglich, eine Tangentialblattfeder 19 im Bereich der Reibfläche an dem Anpressplattenkörper 30 zu befestigen. Wie Fig. 18 zeigt, erfordert eine solche Anordnung bei einer Befestigung mittels eines Nietes, wie er herkömmlicherweise verwendet wird, deutlich mehr Aufwand, weil der Anbringungsbereich 36 auf alle Fälle gegenüber der Reibfläche 16 zurückgesetzt sein muss, um Platz für den Nietkopf 46a zu schaffen. Dies erfordert jedoch einen zusätzlichen Arbeitsschritt, der bei Verwendung der in Fig. 17a und 17b gezeigten Befestigungsmöglichkeit entfällt. Wie Fig. 19 zeigt, ist es selbstverständlich auch möglich, die in den Fig. 17a und 17b gezeigte Variante der Befestigung einer Tangentialblattfeder 19 an dem Anpressplattenkörper 30 dann zu verwenden, wenn die Tangentialblattfeder 19 außerhalb des Bereichs der Reibfläche 16 angeordnet ist.

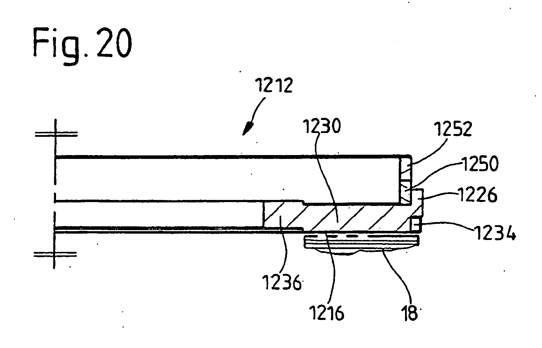

In Fig. 20 ist eine Ausgestaltungsform 212 der erfindungsgemäßen Anpressplatte zu sehen, die für eine verschleißausgleichende Druckplattenbaugruppe eingesetzt werden kann. Auch hier sind wiederum solche Komponenten der Anpressplatte 1212, die identisch mit solchen in den vorangehend beschriebenen Ausgestaltungsformen sind bzw. deren Funktion der Funktion bereits beschriebener Komponenten entspricht, mit denselben Bezugszeichen, jeweils gegenüber der in Fig. 3 beschriebenen Ausgestaltungsform um 1200 erhöht, bezeichnet. Die Anpressplatte 1212 ist wiederum aus einem Stahlblechrohling hergestellt und besitzt einen Anpressplattenkörper 1230, der ringförmig ist und eine Reibfläche 1216 umfasst. Am inneren Rand des Anpressplattenkörpers 1230 ist ein gegenüber der Reibfläche versetzt ausgebildeter Innenbund 1236 angeformt. Weiterhin ist am radial äußeren Rand des Anpressplattenkörpers 1230 ein in Richtung zum Kupplungsgehäuse 14 vorstehender, beispielsweise ringförmig oder segmentartig ausgebildeter Vorsprung 1226 angeformt. Dieser Vorsprung 1226 dient jetzt aber nicht zur direkten Beaufschlagung durch die Membranfeder 20, wie in den vorangehend erläuterten Ausgestaltungsformen, sondern dient zur Zentrierung von zwei Nachstellringen 1250, 1252 der Verschleißnachstellvorrichtung. Diese Nachstellringe 1250, 1252 der an sich bekannten Verschleißnachstellvorrichtung liegen jeweils an zueinander komplementär sägezahnförmig verlaufenden Oberflächenbereichen aneinander an, so dass mit den jeweiligen aneinander anliegenden Sägezahnflächen die Nachstellringe 1250, 1252 in Umfangsrichtung bezüglich einander verlagerbar sind. Dies bedeutet, dass diese Sägezahnflächen bei Relativdrehung der Nachstellringe 1250, 1252 aneinander abgleiten und durch die Schrägstellung dazu führen, dass die Gesamtaxialerstreckung der Verschleißnachstellvorrichtung vergrößert wird. Bei dieser Ausgestaltungsform beaufschlagt beispielsweise eine Membranfeder 20 als Kraftspeicher den von der Anpressplatte 1212 entfernt angeordneten Verschleißnachstellring 1252. Über den anderen Verschleißnachstellring 1250 wird die Anpresskraft der Membranfeder 20 dann auf die Anpressplatte 1212 übertragen. Die Funktion des ringförmigen oder segmentweise ausgebildeten Vorsprungs 1226 ist es primär, eine Verlagerung der Verschleißnachstellringe 1252, 1250 in radialer Richtung zu verhindern, d.h. er zentriert die beiden Verschleißnachstellringe 1250, 1252. Bei der in Fig. 20 gezeigten Ausgestaltungsvariante ist dieser Zentrierring 1226 durchgängig am äußeren Rand der Anpressplatte 1212 ausgebildet, es kommen hierfür jedoch ebenfalls alle zuvor mit Bezugnahme auf eine Anpressplatte für eine nicht verschleißnachstellende Druckplattenbaugruppe beschriebenen Ausgestaltungsformen in Frage, auf die hiermit ausdrücklich verwiesen wird.

## Patentansprüche

1. Anpressplatte (12; 112; 212; 312; 412; 512; 612; 712; 812; 912; 1012; 1112) für eine Druckplattenbaugruppe (10) einer Kraftfahrzeugreibungskupplung, umfassend einen aus Blechwerkstoff gebildeten und eine Reibfläche aufweisenden Anpressplattenkörper (30; 130; 230; 330; 430; 530; 630; 730; 830; 930; 1030; 1130) und an dem Anpressplattenkörper (30; 130; 230; 330; 430; 530; 630; 730; 830; 930; 1030; 1130, 1230) eine Formation (26a - 26f; 126a - 126f; 226a - 226f; 326a - 326f; 426a - 426f; 526; 626a - 626f; 726a - 726f; 826a - 826f; 926a - 926f; 1026a - 1026f; 1126a -1126f) zur Beaufschlagung beispielsweise durch einen Kraftspeicher (20) dass angeformt ist,
**dadurch gekennzeichnet,**
**dass** die Formation (26a - 26f; 126a -126f; 226a - 226f; 326a - 326f; 426a - 426f; 526; 626a - 626f; 726a - 726f; 826a - 826f; 926a - 926f; 1026a -1026f; 1126a - 1126f; 1226) wenigstens eine Auswölbung bildet und dass im Bereich der Formation (26a - 26f; 126a -126f; 226a - 226f; 326a - 326f; 426a - 426f; 526; 626a - 626f; 726a - 726f; 826a - 826f; 926a - 926f; 1026a - 1026f; 1126a - 1126f; 1226) auf der Reibflächenseite (16; 116; 216; 316; 416; 516; 616; 716; 816; 916; 1016; 1116; 1216) wenigstens eine entsprechende Vertiefung (34a - 34f; 134a - 134f; 234a - 234f; 334a - 334f; 434a - 434f; 534; 634a - 534f; 734a - 734f; 834a - 834f; 934a - 934b; 1034a - 1034f; 1134a -1134f; 1234) ausgebildet ist.,
oder die Formation (1226) zur Zentrierung einer durch, beispielsweise den Kraftspeicher (20), beaufschlagten Verschleißnachstelleinrichtung (1250, 1252) angeformt ist.

2. Anpressplatte (12; 212; 312; 412; 512; 612; 712; 812; 912; 1012; 1112; 1212) nach Anspruch 1,
**dadurch gekennzeichnet, dass** die Formation (26a - 26f; 226a - 226f; 326a - 326f; 426a - 426f; 526; 626a - 626f; 726a - 726f; 826a - 826f; 926a - 926f; 1026a - 1026f; 1126a - 1126f; 1226) wenigstens einen sich näherungsweise in Umfangsrichtung der Anpressplatte erstreckenden, länglichen Abschnitt aufweist.

3. Anpressplatte (112) nach einem der Ansprüche 1 bis 2,
**dadurch gekennzeichnet, dass** die Formation (112a -126f) runde Abschnitte aufweist, die näherunsweise entlang einer Umfangsrichtung der Anpressplatte (112) angeordnet sind.

4. Anpressplatte (12; 212; 312; 412; 512; 612; 712; 812; 912; 1012; 1112; 1212) nach einem der Ansprüche 1 bis 3,
**dadurch gekennzeichnet, dass** die Anpressplatte (12; 212; 312; 412; 512; 612; 712; 812; 912; 1012; 1112; 1212) radial wenigstens abschnittsweise über die Reibfläche (16; 116; 216; 316; 416; 516; 616; 716; 816; 916; 1016; 1116; 1216) hinausreicht.

5. Anpressplatte (412; 512; 612; 712; 812; 912; 1012; 1112; 1212) nach einem der Ansprüche 1 bis 4, ,
**dadurch gekennzeichnet, dass** wenigstens ein Teilbereich (36; 436; 536; 636; 736a - 736f; 836; 938a - 938f; 1038a - 1038f; 1138a - 1138f; 1236) der Anpressplatte (412; 512; 612; 712; 812; 912; 1012; 1112; 1212) bezüglich der Reibfläche (416; 516; 616; 716; 816; 916; 1016; 1116; 1216) versetzt ausgebildet ist.

6. Anpressplatte (412; 512; 612; 712; 812; 1212) nach Anspruch 5,
**dadurch gekennzeichnet, dass** der wenigstens eine bezüglich der Reibfläche (416; 516; 616; 716; 816; 1016) versetzte Bereich am Außenrand oder/und am Innenrand der Anpressplatte (412; 512; 612; 712; 812; 1212) angeordnet ist.

7. Anpressplatte nach einem der Ansprüche 1 bis 6,
**dadurch gekennzeichnet, dass** die Reibfläche konisch verläuft.

8. Anpressplatte (912; 1012; 1112) nach einem der Ansprüche 1 bis 7,
**gekennzeichnet durch** wenigstens einen von einem radial inneren zu einem radial äußeren Bereich verlaufenden Rippenabschnitt (938a; 1038f; 1138a; 1138b; 1138c; 1138d; 1138e).

9. Anpressplatte (1012; 1112) nach Anspruch 8,
**dadurch gekennzeichnet, dass** der wenigstens eine Rippenabschnitt (1038f; 1138a; 1138c; 1138e) einen Abschnitt (1026f; 1126a; 1126b; 1126c) der Formation schneidet.

10. Anpressplatte (912; 1012; 1112) nach einem der Ansprüche 1 bis 9,
**gekennzeichnet durch** wenigstens eine auf der Reibflächenseite ausgebildete, vorzugsweise nach radial außen hin offene Vertiefung (940a; 1040f; 1140a; 1140b; 1140c; 1140d; 1140e).

11. Anpressplatte (912; 1012; 1112) nach Anspruch 10 und einem der Ansprüche 8 und 9,
**dadurch gekennzeichnet, dass** der wenigstens eine Rippenabschnitt (938a; 1038f; 1138a; 1138b; 1138c; 1138d; 1138e) im Bereich einer Vertiefung (940a; 1040f; 1140a; 1140b; 1140c; 1140d; 1140e) ausgebildet ist.

12. Anpressplatte (12; 112; 212; 312; 512; 612; 812; 1112) nach einem der Ansprüche 1 bis 11,
**dadurch gekennzeichnet, dass** an der Anpressplatte (12; 112; 212; 312; 512; 612; 812; 1112) wenigstens ein Anbringungsbereich (32a - 32f; 36; 132a - 132f; 232a - 232f; 332a - 332f; 532a - 532f; 632a - 632f; 832a - 832f; 1132a - 1132f) für eine Blattfederanordnung vorgesehen ist.

13. Anpressplatte (12; 112; 212; 312; 512; 612; 812; 1112) nach Anspruch 12,
**dadurch gekennzeichnet, dass** der wenigstens eine Anbringungsbereich (32a - 32f; 36; 132a - 132f; 232a - 232f; 332a - 332f; 532a - 532f; 632a - 632f; 832a - 832f; 1132a - 1132f) für eine Blattfederanordnung einen angeformten Fortsatz (44) umfasst.

14. Verfahren zur Herstellung einer Anpressplatte (12; 112; 212; 312; 412; 512; 612; 712; 812; 912; 1012; 1112; 1212) für eine Druckplattenbaugruppe einer Kraftfahrzeugreibungskupplung, umfassend die Schritte:
a) Bilden eines Blechrohlings für einen eine Reibfläche bereitstellenden Anpressplattenkörper (30; 130; 230; 330; 430; 530; 630; 730; 830; 930; 1030; 1130; 1230)
b) Tiefziehen des Blechrohlings zum Bereitstellen einer Formation (26a - 26f; 126a -126f; 226a - 226f; 326a - 326f; 426a - 426f; 526; 626a - 626f; 726a - 726f; 826a - 826f; 926a - 926f; 1026a - 1026f; 1126a - 1126f) zur Beaufschlagung, beispielsweise durch einen Kraftspeicher (20), oder zur Zentrierung (426) einer, beispielsweise durch einen Kraftspeicher (20), beaufschlagten Verschleißnachstelleinrichtung (1250, 1252).

15. Verfahren nach Anspruch 14,
**dadurch gekennzeichnet, dass** Schritt b) das Ausbilden eines von der Reibfläche (416; 516; 716; 816; 916; 1016; 1116; 1216) zurückgesetzten Abschnitts (436; 536; 636; 736a - 736f; 836; 938a; 1038f; 1138a - 1138f; 1236) umfasst.

16. Verfahren nach einem der Anspruch 14,
**dadurch gekennzeichnet, dass** Schritt b) ferner das Ausbilden wenigstens eines von einem radial inneren zu einem radial äußeren Bereich verlaufenden Rippenabschnitts (938a; 1038f; 1138a -1138e) und das Ausbilden einer Vertiefung (940a; 1040f; 1140a -1140f) im Bereich des wenigstens einen Rippenabschnitts (938a; 1038f; 1138a -1138e) auf der Reibflächenseite umfasst.

17. Verfahren nach einem der Ansprüche 14 bis 16,
**dadurch gekennzeichnet, dass** Schritt b) ferner das Ausbilden wenigstens einer radial nach außen hin offenen Vertiefung (940a; 1040f; 1140a - 1140f) auf der Reibflächenseite der Anpressplatte (912, 1012, 1112) umfasst.

18. Verfahren nach einem der Ansprüche 14 bis 17,
**dadurch gekennzeichnet, dass** Schritt b) ferner das Anformen wenigstens eines Fortsatzes (44) an dem Anpressplattenkörper (30) zur Anbringung einer Blattfederanordnung umfasst.

## Claims

1. Pressure plate (12; 112; 212; 312; 412; 512; 612; 712; 812; 912; 1012; 1112) for a pressure-plate assembly (10) of a motor-vehicle friction clutch, comprising a pressure-plate body (30; 130; 230; 330; 430; 530; 630; 730; 830; 930; 1030; 1130) which is formed from sheet-metal material and has a friction face, and a formation (26a - 26f; 126a - 126f; 226a - 226f; 326a - 326f; 426a - 426f; 526; 626a - 626f; 726a - 726f; 826a - 826f; 926a - 926f; 1026a - 1026f; 1126a - 1126f) on the pressure-plate body (30; 130; 230; 330; 430; 530; 630; 730; 830; 930; 1030; 1130; 1230) for loading, for example, by a force accumulator (20) that is integrally formed, **characterized in that** the formation (26a - 26f; 126a - 126f; 226a - 226f; 326a - 326f; 426a - 426f; 526; 626a - 626f; 726a - 726f; 826a - 826f; 926a - 926f; 1026a - 1026f; 1126a - 1126f; 1226) forms at least one protuberance, and **in that** at least one corresponding depression (34a - 34f; 134a - 134f; 234a - 234f; 334a - 334f; 434a - 434f; 534; 634a - 634f; 734a - 734f; 834a - 834f; 934a - 934b; 1034a - 1034f; 1134a - 1134f; 1234) is formed on the friction-face side (16; 116; 216; 316; 416; 516; 616; 716; 816; 916; 1016; 1116; 1216) in the region of the formation (26a - 26f; 126a - 126f; 226a - 226f; 326a - 326f; 426a - 426f; 526; 626a - 626f; 726a - 726f; 826a - 826f; 926a - 926f; 1026a - 1026f; 1126a - 1126f; 1226), or the formation (1226) for centring a wear-adjustment device (1250, 1252) which is loaded by, for example, the force accumulator (20), is integrally formed.

2. Pressure plate (12; 212; 312; 412; 512; 612; 712; 812; 912; 1012; 1112; 1212) according to Claim 1, **characterized in that** the formation (26a - 26f; 226a - 226f; 326a - 326f; 426a - 426f; 526; 626a - 626f; 726a - 726f; 826a - 826f; 926a - 926f; 1026a - 1026f; 1126a - 1126f; 1226) has at least one elongate section which extends approximately in the circumferential direction of the pressure plate.

3. Pressure plate (112) according to either of Claims 1 and 2, **characterized in that** the formation (112a - 126f) has round sections which are arranged approximately along a circumferential direction of the pressure plate (112).

4. Pressure plate (12; 212; 312; 412; 512; 612; 712; 812; 912; 1012; 1112; 1212) according to one of Claims 1 to 3, **characterized in that** the pressure plate (12; 212; 312; 412; 512; 612; 712; 812; 912; 1012; 1112; 1212) reaches radially at least in sections beyond the friction face (16; 116; 216; 316; 416; 516; 616; 716; 816; 916; 1016; 1116; 1216).

5. Pressure plate (412; 512; 612; 712; 812; 912; 1012; 1112; 1212) according to one of Claims 1 to 4, **characterized in that** at least one part region (36; 436; 536; 636; 736a - 736f; 836; 938a - 938f; 1038a - 1038f; 1138a - 1138f; 1236) of the pressure plate (412; 512; 612; 712; 812; 912; 1012; 1112; 1212) is configured to be offset with regard to the friction face (416; 516; 616; 716; 816; 916; 1016; 1116; 1216).

6. Pressure plate (412; 512; 612; 712; 812; 1212) according to Claim 5, **characterized in that** the at least one region which is offset with regard to the friction face (416; 516; 616; 716; 816; 1016) is arranged at the outer edge and/or at the inner edge of the pressure plate (412; 512; 612; 712; 812; 1212).

7. Pressure plate according to one of Claims 1 to 6, **characterized in that** the friction face extends conically.

8. Pressure plate (912; 1012; 1112) according to one of Claims 1 to 7, **characterized by** at least one rib section (938a; 1038f; 1138a; 1138b; 1138c; 1138d; 1138e) which extends from a radially inner region to a radially outer region.

9. Pressure plate (1012; 1112) according to Claim 8, **characterized in that** the at least one rib section (1038f; 1138a; 1138c; 1138e) intersects a section (1026f; 1126a; 1126b; 1126c) of the formation.

10. Pressure plate (912; 1012; 1112) according to one of Claims 1 to 9, **characterized by** at least one depression (940a; 1040f; 1140a; 1140b; 1140c; 1140d; 1140e) which is formed on the friction-face side and is preferably open radially to the outside.

11. Pressure plate (912; 1012; 1112) according to Claim 10 and either of Claims 8 and 9, **characterized in that** the at least one rib section (938a; 1038f; 1138a; 1138b; 1138c; 1138d; 1138e) is formed in the region of a depression (940a; 1040f; 1140a; 1140b; 1140c; 1140d; 1140e).

12. Pressure plate (12; 112; 212; 312; 512; 612; 812; 1112) according to one of Claims 1 to 11, **characterized in that** at least one attachment region (32a - 32f; 36; 132a - 132f; 232a - 232f; 332a - 332f; 532a - 532f; 632a - 632f; 832a - 832f; 1132a - 1132f) is provided on the pressure plate (12; 112; 212; 312; 512; 612; 812; 1112) for a leaf-spring arrangement.

13. Pressure plate (12; 112; 212; 312; 512; 612; 812; 1112) according to Claim 12, **characterized in that** the at least one attachment region (32a - 32f; 36; 132a - 132f; 232a - 232f; 332a - 332f; 532a - 532f; 632a - 632f; 832a - 832f; 1132a - 1132f) for a leaf-spring arrangement comprises an integrally formed projection (44).

14. Method for producing a pressure plate (12; 112; 212; 312; 412; 512; 612; 712; 812; 912; 1012; 1112; 1212) for a pressure-plate assembly of a motor-vehicle friction clutch, comprising the following steps:
a) formation of a sheet-metal blank for a pressure-plate body (30; 130; 230; 330; 430; 530; 630; 730; 830; 930; 1030; 1130; 1230) which provides a friction face
b) deep-drawing of the sheet-metal blank for providing a formation (26a - 26f; 126a - 126f; 226a - 226f; 326a - 326f; 426a - 426f; 526; 626a - 626f; 726a - 726f; 826a - 826f; 926a - 926f; 1026a - 1026f; 1126a - 1126f) for loading, for example by a force accumulator (20), or for centring (426) a wear-adjustment device (1250, 1252) which is loaded, for example, by a force accumulator (20).

15. Method according to Claim 14, **characterized in that** step b) comprises the formation of a section (436; 536; 636; 736a - 736f; 836; 938a; 1038f; 1138a - 1138f; 1236) which is set back from the friction face (416; 516; 716; 816; 916; 1016; 1116; 1216).

16. Method according to Claim 14, **characterized in that** step b) comprises, furthermore, the formation of at least one rib section (938a; 1038f; 1138a - 1138e) which extends from a radially inner region to a radially outer region, and the formation of a depression (940a; 1040f; 1140a - 1140f) in the region of the at least one rib section (938a; 1038f; 1138a - 1138e) on the friction-face side.

17. Method according to one of Claims 14 to 16, **characterized in that** step b) comprises, furthermore, the formation of at least one depression (940a; 1040f; 1140a - 1140f) which is open radially to the outside on the friction-face side of the pressure plate (912, 1012, 1112).

18. Method according to one of Claims 14 to 17, **characterized in that** step b) comprises, furthermore, the integral formation of at least one projection (44) on the pressure-plate body (30) for attaching a leaf-spring arrangement.

## Revendications

1. Plateau de pression (12 ; 112 ; 212 ; 312 ; 412 ; 512 ; 612 ; 712 ; 812 ; 912 ; 1012 ; 1112) pour un module de plateau de pression (10) d'un embrayage à friction d'un véhicule automobile, comprenant un corps de plateau de pression (30 ; 130 ; 230 ; 330 ; 430 ; 530 ; 630 ; 730 ; 830 ; 930 ; 1030 ; 1130) formé en tôle et présentant une face de friction, et, sur le corps de plateau de pression (30 ; 130 ; 230 ; 330 ; 430 ; 530 ; 630 ; 730 ; 830 ; 930 ; 1030 ; 1130, 1230), une formation (26a-26f ; 126a-126f ; 226a-226f ; 326a-326f ; 426a-426f ; 526 ; 626a-626f ; 726a-726f ; 826a-826f ; 926a-926f ; 1026a-1026f ; 1126a-1126f) destinée à être sollicitée par exemple par un accumulateur de force (20) qui est façonné,
**caractérisé en ce que**
la formation (26a-26f ; 126a-126f ; 226a-226f ; 326a-326f ; 426a-426f ; 526 ; 626a-626f ; 726a-726f ; 826a-826f ; 926a-926f ; 1026a-1026f ; 1126a-1126f ; 1226) forme au moins un bombement et **en ce que** dans la région de la formation (26a-26f ; 126a-126f ; 226a-226f ; 326a-326f ; 426a-426f ; 526 ; 626a-626f ; 726a-726f ; 826a-826f ; 926a-926f ; 1026a-1026f ; 1126a-1126f ; 1226), du côté de la face de friction (16 ; 116 ; 216 ; 316 ; 416 ; 516 ; 616 ; 716 ; 816 ; 916 ; 1016 ; 1116 ; 1216), est réalisé au moins un renfoncement correspondant (34a-34f ; 134a-134f ; 234a-234f ; 334a - 334f ; 434a - 434f ; 534 ; 634a-634f ; 734a-734f ; 834a-834f ; 934a-934b ; 1034a-1034f ; 1134a-1134f ; 1234), ou la formation (1226) est façonnée pour le centrage d'un dispositif de post-ajustement d'usure (1250, 1252) sollicité par exemple par l'accumulateur de force (20).

2. Plateau de pression (12 ; 112 ; 212 ; 312 ; 412 ; 512 ; 612 ; 712 ; 812 ; 912 ; 1012 ; 1112 ; 1212) selon la revendication 1,
**caractérisé en ce que** la formation (26a-26f ; 226a-226f ; 326a-326f ; 426a-426f ; 526 ; 626a-626f ; 726a-726f ; 826a-826f ; 926a-926f ; 1026a-1026f ; 1126a-1126f ; 1226) présente au moins une portion allongée s'étendant approximativement dans la direction périphérique du plateau de pression.

3. Plateau de pression (112) selon l'une quelconque des revendications 1 à 2,
**caractérisé en ce que** la formation (126a-126f) présente des portions rondes qui sont disposées approximativement le long d'une direction périphérique du plateau de pression (112).

4. Plateau de pression (12 ; 212 ; 312 ; 412 ; 512 ; 612 ; 712 ; 812 ; 912 ; 1012 ; 1112 ; 1212) selon l'une quelconque des revendications 1 à 3,
**caractérisé en ce que** le plateau de pression (12 ; 212 ; 312 ; 412 ; 512 ; 612 ; 712 ; 812 ; 912 ; 1012 ; 1112 ; 1212) s'étend radialement au moins en partie au-delà de la surface de friction (16 ; 116 ; 216 ; 316 ; 416 ; 516 ; 616 ; 716 ; 816 ; 916 ; 1016 ; 1116 ; 1216).

5. Plateau de pression (412 ; 512 ; 612 ; 712 ; 812 ; 912 ; 1012 ; 1112 ; 1212) selon l'une quelconque des revendications 1 à 4,
**caractérisé en ce qu'**au moins une région partielle (36 ; 436 ; 536 ; 636 ; 736a-736f ; 836 ; 938a-938f ; 1038a-1038f ; 1138a-1138f ; 1236) du plateau de pression (412 ; 512 ; 612 ; 712 ; 812 ; 912 ; 1012 ; 1112 ; 1212) est réalisée de manière décalée par rapport à la face de friction (416 ; 516 ; 616 ; 716 ; 816 ; 916 ; 1016 ; 1116 ; 1216).

6. Plateau de pression (412 ; 512 ; 612 ; 712 ; 812 ; 1212) selon la revendication 5,
**caractérisé en ce que** l'au moins une région décalée par rapport à la face de friction (416 ; 516 ; 616 ; 716 ; 816 ; 1016) est disposée sur le bord extérieur et/ou sur le bord intérieur du plateau de pression (412 ; 512 ; 612 ; 712 ; 812 ; 1212).

7. Plateau de pression selon l'une quelconque des revendications 1 à 6,
**caractérisé en ce que** la face de friction s'étend de manière conique.

8. Plateau de pression (912 ; 1012 ; 1112) selon l'une quelconque des revendications 1 à 7,
**caractérisé par** au moins une portion de nervure (938a ; 1038f ; 1138a ; 1138b ; 1138c ; 1138d ; 1138e) s'étendant depuis une région radialement intérieure jusqu'à une région radialement extérieure.

9. Plateau de pression (1012 ; 1112) selon la revendication 8,
**caractérisé en ce que** l'au moins une portion de nervure (1038f ; 1138a ; 1138c ; 1138e) coupe une portion (1026f ; 1126a ; 1126b ; 1126c) de la formation.

10. Plateau de pression (912 ; 1012 ; 1112) selon l'une quelconque des revendications 1 à 9, **caractérisé par** au moins un renfoncement (940a ; 1040f ; 1140a ; 1140b ; 1140c ; 1140d ; 1140e) réalisé sur le côté de la face de friction, de préférence ouverte radialement vers l'extérieur.

11. Plateau de pression (912 ; 1012 ; 1112) selon la revendication 10 et l'une quelconque des revendications 8 et 9,
**caractérisé en ce que** l'au moins une portion de nervure (938a ; 1038f ; 1138a ; 1138b ; 1138c ; 1138d ; 1138e) est réalisée dans la région d'un renfoncement (940a ; 1040f ; 1140a ; 1140b ; 1140c ; 1140d ; 1140e).

12. Plateau de pression (12 ; 112 ; 212 ; 312 ; 512 ; 612 ; 812 ; 1112) selon l'une quelconque des revendications 1 à 11,
**caractérisé en ce qu'**il est prévu sur le plateau de pression (12 ; 112 ; 212 ; 312 ; 512 ; 612 ; 812 ; 1112) au moins une région de montage (32a-32f ; 36 ; 132a-132f ; 232a-232f ; 332a-332f ; 532a-532f ; 632a-632f ; 832a-832f ; 1132a-1132f) pour un agencement de ressort à lame.

13. Plateau de pression (12 ; 112 ; 212 ; 312 ; 512 ; 612 ; 812 ; 1112) selon la revendication 12,
**caractérisé en ce que** l'au moins une région de montage (32a-32f ; 36 ; 132a-132f ; 232a-232f ; 332a-332f ; 532a-532f ; 632a-632f ; 832a-832f ; 1132a-1132f) pour un agencement de ressort à lame comprend une saillie façonnée (44).

14. Procédé de fabrication d'un plateau de pression (12 ; 112 ; 212 ; 312 ; 412 ; 512 ; 612 ; 712 ; 812 ; 912 ; 1012 ; 1112 ; 1212) pour un module de plateau de pression d'un embrayage à friction d'un véhicule automobile, comprenant les étapes suivantes :
a) formation d'une ébauche en tôle pour un corps de plateau de pression (30 ; 130 ; 230 ; 330 ; 430 ; 530 ; 630 ; 730 ; 830 ; 930 ; 1030 ; 1130 ; 1230) fournissant une face de friction
b) emboutissage profond de l'ébauche en tôle pour fournir une formation (26a-26f ; 126a-126f ; 226a-226f ; 326a-326f ; 426a-426f ; 526 ; 626a-626f ; 726a-726f ; 826a-826f ; 926a-926f ; 1026a-1026f ; 1126a-1126f) destinée à être sollicitée, par exemple par un accumulateur de force (20), ou pour le centrage (426) d'un dispositif de post-ajustement d'usure (1250, 1252) sollicité par exemple par un accumulateur de force (20) .

15. Procédé selon la revendication 14,
**caractérisé en ce que** l'étape b) comprend la réalisation d'une portion (436 ; 536 ; 636 ; 736a-736f ; 836 ; 938a ; 1038f ; 1138a-1138f ; 1236) en retrait par rapport à la face de friction (416 ; 516 ; 716 ; 816 ; 916 ; 1016 ; 1116 ; 1216).

16. Procédé selon la revendication 14,
**caractérisé en ce que** l'étape b) comprend en outre la réalisation d'au moins une portion de nervure (938a ; 1038f ; 1138a-1138e) s'étendant depuis une région radialement intérieure jusqu'à une région radialement extérieure et la réalisation d'un renfoncement (940a ; 1040f ; 1140a-1140f) dans la région de l'au moins une portion de nervure (938a ; 1038f ; 1138a-1138e) sur le côté de la face de friction.

17. Procédé selon l'une quelconque des revendications 14 à 16,
**caractérisé en ce que** l'étape b) comprend en outre la réalisation d'au moins un renfoncement (940a ; 1040f ; 1140a - 1140f) ouvert radialement vers l'extérieur sur le côté de la face de friction du plateau de pression (912, 1012, 1112).

18. Procédé selon l'une quelconque des revendications 14 à 17,
**caractérisé en ce que** l'étape b) comprend en outre le façonnage d'au moins une saillie (44) sur le corps du plateau de pression (30) pour le montage d'un agencement de ressort à lame.
